# EUROPEAN PATENT SPECIFICATION

(11) **EP 0 386 406 B1**
(45) Date of publication and mention of the grant of the patent: **17.05.1995**
(21) Application number: 90100592.6
(22) Date of filing: 12.01.1990
(51) Int. Cl.: C08K 5/12, C08K 5/20, C08L 23/02

(54) **Polyhaloaromatic ester flame retardants for polyolefin resins**
Polyhalogenaromatische Ester als Flammschutzmittel für Polyolefinharze
Esters polyhaloaromatiques ignifuges pour des résines polyoléfiniques

(30) Priority: 10.03.1989 US 322035
(43) Date of publication of application: 12.09.1990
(73) Proprietor: ELF ATOCHEM NORTH AMERICA, INC., Philadelphia Pennsylvania 19102-3222 (US)
(72) Inventor: Bohen, Joseph Michael, King of Prussia Pennsylvania 19406 (US); Reifenberg, Gerald Harvey, East Windsor New Jersey 08520 (US)
(74) Representative: Kraus, Walter, Dr.

(56) References cited:
- WO-A-89/02887
- WO-A-89/03854
- US-A- 3 775 165
- US-A- 3 833 641
- US-A- 4 762 861

## Description

The present invention relates to flame retardant compositions containing halogen-substituted compounds and a polyolefin resin. More particularly, the invention is directed to methods and compositions for improving the flame retardancy and processability of polyolefin resins using halogen-substituted compounds.

The use of brominated and/or chlorinated compounds by themselves or in combination with other materials such as organic phosphates, boron compounds, etc., as flame retardants for resin compositions is well known in the art. For example, US-PS 3 775 165 of Young et al. describes halogenated aromatic dicarboxylic acid diesters useful for improving the flame retarding and dyeing properties of polyester fibers and polypropylene polymers and fibers.

Further, tetrahalophthalate esters have been used as flame-proofing materials. For example, US-PS 4 098 704 of Sandler describes the use of these materials as textile finishing agents. US-PS 4 298 517 and 4 397 977 of Sandler disclose these compounds as flame retardants for halogenated resins. US-PS 4 762 861 of Bohen et al. discloses tetrahalophthalate esters as flame retardant processing aids for polystyrene resins.

Polyhalophenyl esters have been used as flame-proofing materials either as additives to plastics or incorporated as part of the polymer backbone. Examples of the latter are polyhalophenyl esters of polymerizable acids such as 2,4,6-tribromophenyl methacrylate, pentabromophenyl methacrylate, 2,4,6-tribromophenyl acrylate, pentachlorophenyl methacrylate, pentabromophenyl acrylate, trichlorophenyl acrylate, tetrabromoxylylene di(methacrylate), etc., which are exemplified by US-PS 3 207 731; 3 210,326; 3 845 102; 3 932 321; 4 032 509; 4 048 263; 4 105 628; 4 108 943; 4 110 296; 4 205 153; and 4 415 704.

Examples of polyhalophenyl esters that have been used as additives to plastics are pentabromophenyl 2,4,4,4-tetrachlorobutyrate, bis(2,4,6-tribromophenyl) tetrachloroterephthalate, pentabromophenyl o-(2,4,6-tribromophenoxymethyl) benzoate, pentabromophenyl o-(pentachlorophenylthiomethyl) benzoate, bis(2,4,6-tribromophenyl) isophthalate, bis(pentabromophenyl) terephthalate, 2,4,6-tribromophenyl 3,5-dibromobenzoate, 2,4,6-tribromophenyl tribromopivalate, pentachlorophenyl tribromopivalate, bis(2,4,6-trichlorophenyl) phthalate, bis(2,4,6-tribromophenyl phthalate, pentachlorophenyl acetate, bis(2,4,6-tribromophenyl) sebacate, and pentabromophenyl acetate, etc. which are exemplified by US-PS 3 275 578; 3 660 351; and 3 804 885, as well as EP-A-73539; JP-A-55/56140; 53/120755; 51/86554; 51/23545; 50/90639; 50/95353; 50/87146; 48/101443 and 47/46478; and DE-OS 2 554 513 and 2 161 526.

Halogen substituted phthalimides have also been used as flame-proofing materials. For example, US-PS 3 873 567 describes the use of these materials as flame retardants in polymers, etc., especially polypropylene. US-PS 4 374 220 describes the use of halosubstituted mono- and bis-phthalimides for polyethylene, polypropylene, ethylene-propylene copolymers, etc. GB-PS 2 114 127 describes carbonate-substituted polyhalophthalimides as flame retardants for polyethylene, among others.

According to the present invention, flame retardant compositions comprising a polyolefin resin and an ester of a polyhaloaromatic acid of the following general formula: 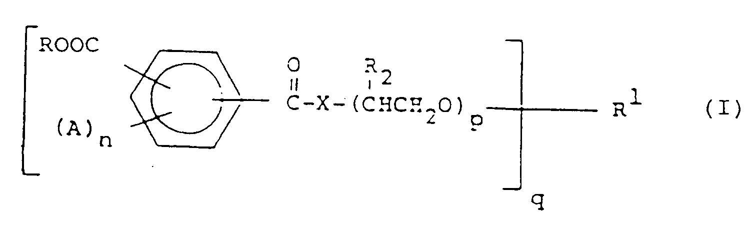
wherein
(a) the ring can have all possible isomeric arrangements
(b) R is selected from the group consisting of alkyl or substituted alkyl of 1 to 30 carbons, and 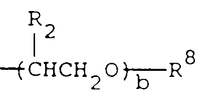 wherein R⁸ is an alkyl or substituted alkyl of 1 to 18 carbons, and b is 1 to 50;
(c) R¹ is selected from the group consisting of alkyl or substituted alkyl of 1 to 30 carbons, alkenyl or substituted alkenyl of 2 to 22 carbons, 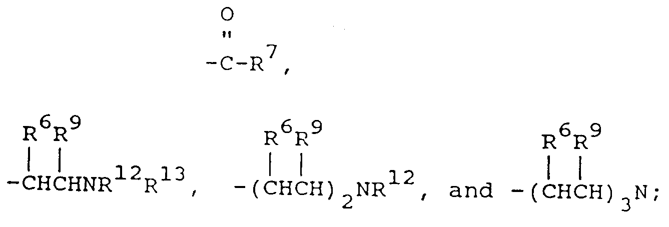 with the proviso that the valence of R¹ is equal to q;
(d) R² is independently selected from the group consisting of H and CH₃;
(e) R⁶, R⁹, R¹² and R¹³ are independently hydrogen or alkyl of 1 to 22 carbons, R⁷ is an alkyl of 1 to 18 carbons;
(f) p is an integer of 0 to 50;
(g) q is an integer of 1 to 6;
(h) A is halogen;
(i) X is O or NH; and
(j) n = 1 to 4, n = 4 excluded
in a weight ratio of ester of polyhaloaromatic acid to polyolefin resin within the range of 1:100 to 1:2; and additionally other brominated and/or chlorinated flame retardants selected from the group consisting of 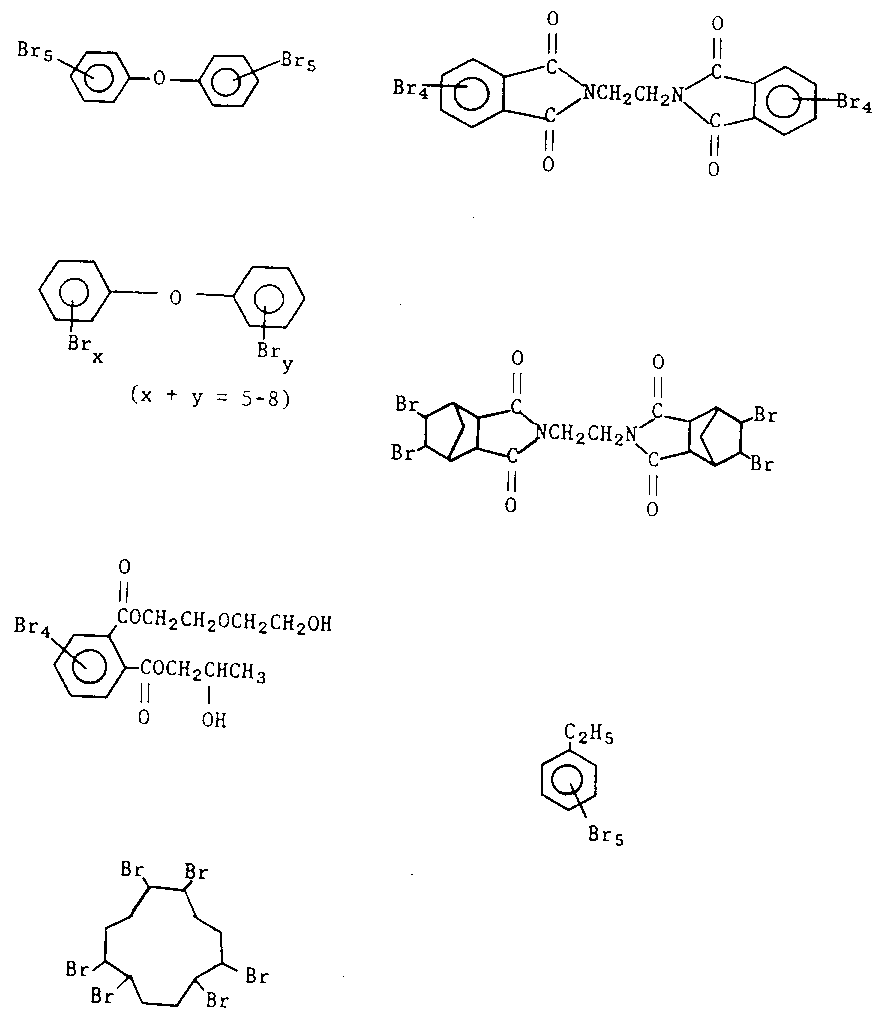 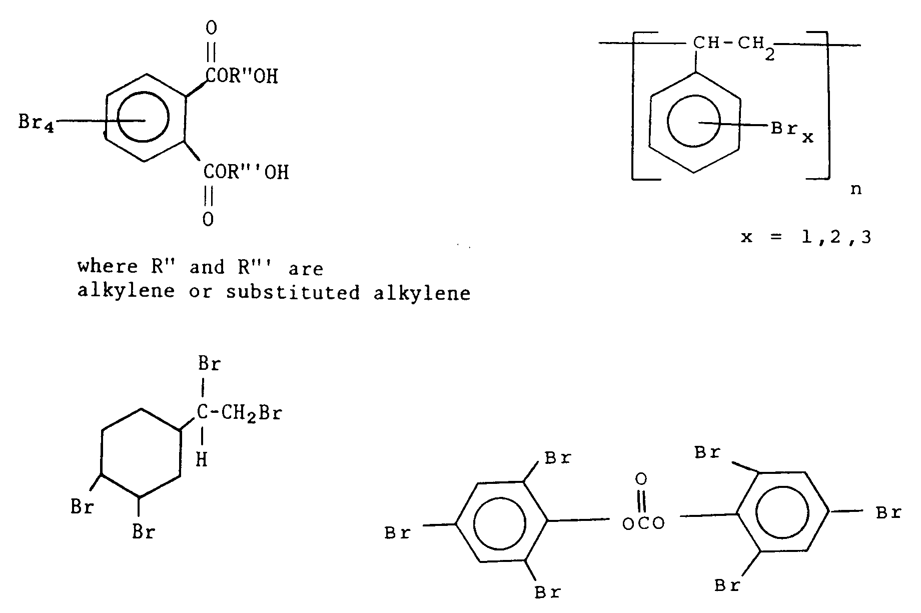 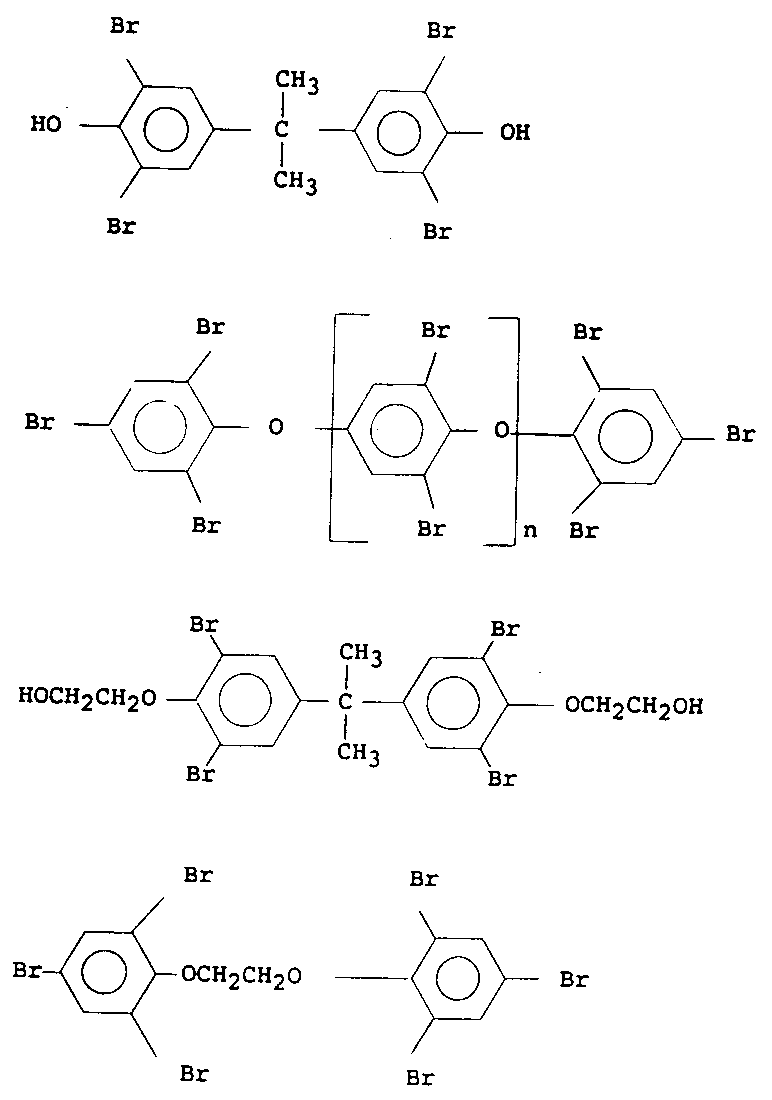 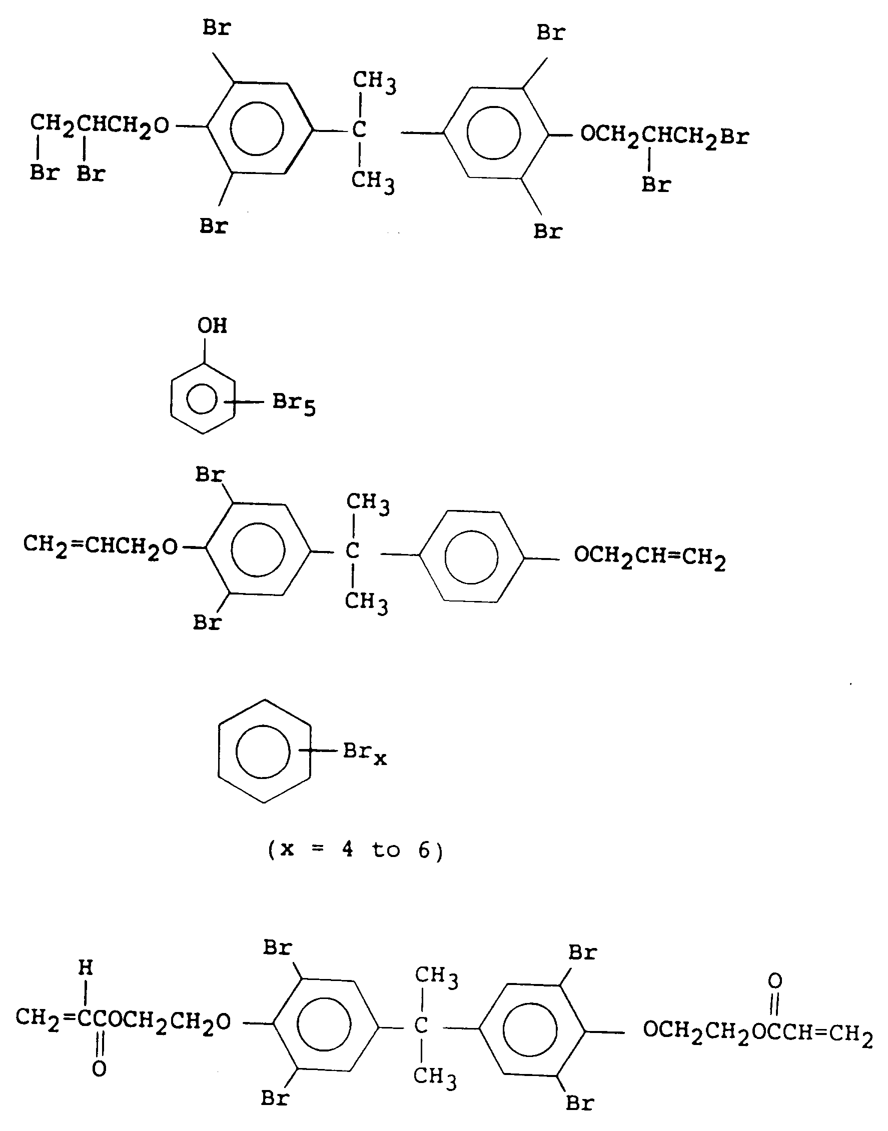 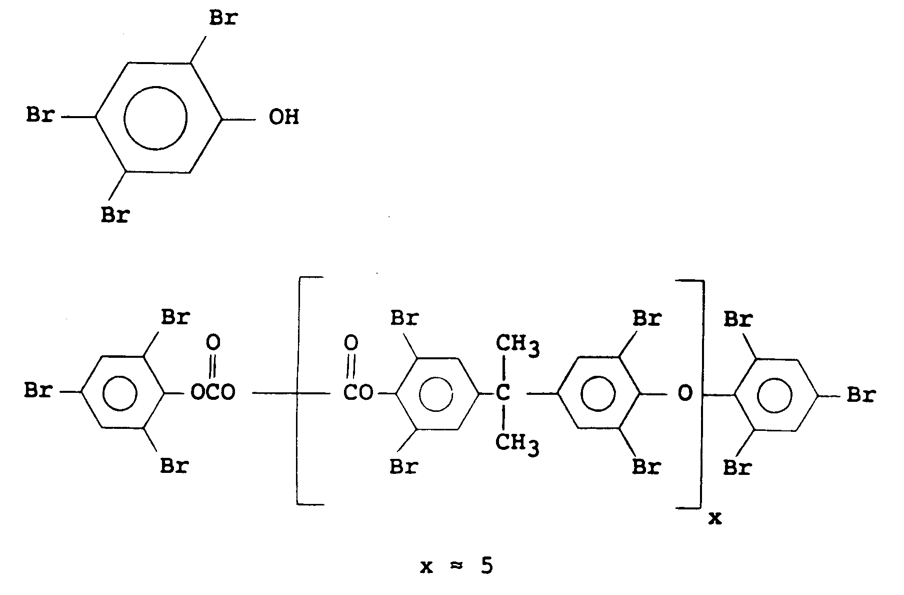
are provided.

The polyhaloaromatic acid esters of the above formula are not only effective to increase the flame retardancy of the polyolefin resins but are also completely compatible with the resins and may serve as tackifiers, mold release agents, plastisols, adhesives, plasticizers, polymer additives, and aids in preventing melt fracture. Moreover, it has been unexpectedly found that the esters improve the impact strength of the polyolefins.

Further, the polyolefin compositions of the present invention may be blended with other resins and engineering thermoplastics, and additional flame retarding additives besides the polyhaloaromatic acid esters may be used. Preferably, the esters contain at least 25 weight percent bound halogen, and more preferably at least 35 weight percent bound bromine.

The resins which can be made flame retardant by incorporating polyhaloaromatic acid esters are any readily flammable polyolefin resins or resin blends including polyolefins. Exemplary of the polyolefins and blends which can be flame-proofed include saturated, unsaturated, linear, atactic, crystalline or non-linear amorphous polymers, copolymers, terpolymers, etc. for example polyethylene, polypropylene, poly(4-methylpentene-1), polybutene-1, polyisobutylene, ethylene-propylene-copolymer, cis-1-4-polyisoprene, ethylene-propylene-dlcyclopentadiene terpolymer, etc. and blends of these polymers with each other or with other polymers.

Particularly preferred polyolefin resins that may be used in this invention are (a) polyethylene which includes all grades, such as low density, linear low density, and high-density grades, (b) polypropylene, (c) ethylene-propylene copolymers, (d) ethylene-vinyl acetate copolymers, (e) polyvinyl acetate, (f) polyvinyl alcohol, (g) poly-4-methylpentene-1, (h) polyisobutylene, and substituted polyolefins, such as (i) polyacrylate esters, and (j) polymethacrylate esters. Combinations of any of the above polyolefins (a to j) by themselves or blends with polystyrenes, styrene-butadiene copolymers, chlorinated polyethylene, polyvinyl chloride, or engineering thermoplastics such as acrylonitrile-styrene-butadiene (ABS), polybutylene terephthalate (PBT), polyphenylene oxides (PPO), polyphenylene oxides - high impact polystyrene (PPO-HIPS), etc., are conceived as falling within the scope of this invention.

The uses and applications of the polyolefin resins of this invention are well known to those skilled in the art. They are discussed, for example, in G. Hawley, Condensed Chemical Encyclopedia, 10th Edition (1981), p. 17 (polyacrylate and polymethacrylate esters), p. 435 (ethylene-propylene and ethylene-vinyl acetate copolymers), p. 829 (polyisobutylene), pp. 830-831 (polyethylene), p. 835 (poly-4-methylpentene-1), p. 837 (polypropylene), p. 840 (polyvinyl alcohol and polyvinyl acetate). The preparation and description of the polyolefin resins that are suitable for use in this invention are also well known in the art. They are discussed, for example, in the Encyclopedia of Polymer Science and Engineering, 2nd Edition, Vol. 1 (1985), pp. 236-305 (polyacrylate and polymethacrylate esters); Vol. 6 (1986), pp. 383-521 (polyethylenes), pp. 408, 421-22 (ethylene-polyvinyl acetate), pp. 522-564 (ethylene-propylene copolymers); Vol. 8, pp. 423-448 (polyisobutylene); Vol. 9, pp. 707-18 (poly-4-methylpentene-1); Encyclopedia of Chemical Technology, 3rd Edition, Vol. 23 (1983), pp. 817-865 (polyvinyl alcohol and polyvinyl acetate).

The polyhaloaromatic acid esters useful in the present invention are known in the art from prior patents of Pennwalt Corporation, now assigned to Elf Atochem North America, Inc. In particular, such esters and their methods of manufacture are described in US-PS 4 764 550 of Lovenguth, particularly in specific examples 47, 48, and 80-83, and US-PS 5 328 627 particularly in specific examples 22, 24-27 and 30-60 Improved high-yield methods of producing these esters are disclosed in US-PS 5 049 697.

Examples of representative polyhaloaromatic acid esters include the following, wherein A is Br or Cl and "av" indicates average or approximate numbers of units since the products are often mixtures of compounds: 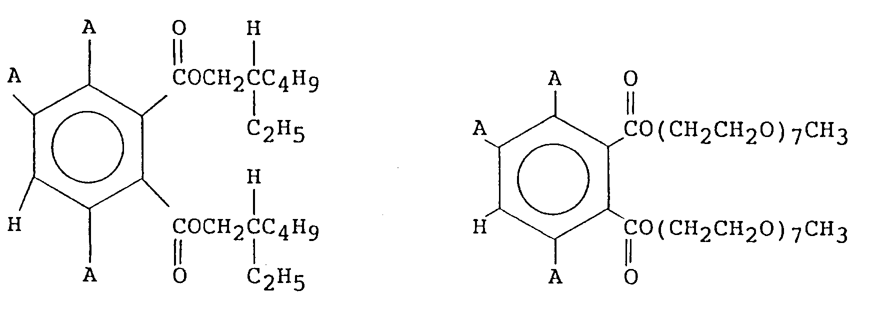
Preferred examples of the esters are as follows: 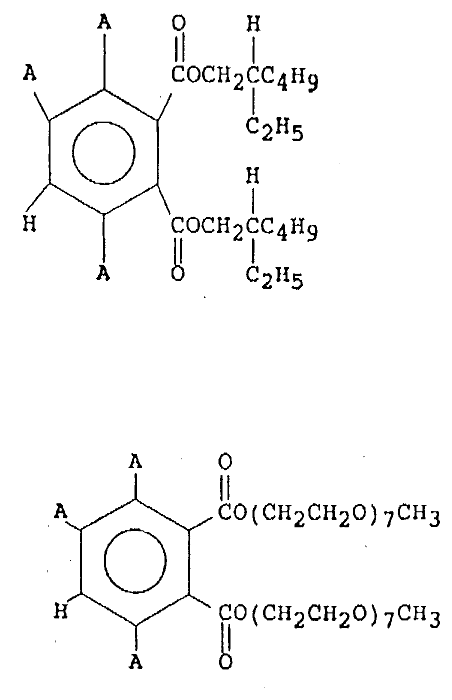
The halogen substituents on the esters of polyhaloaromatic acids useful in the present invention are preferably selected from chlorine and bromine. Moreover, it is desirable that the halogen substituents comprise a large percentage of the esters of this invention, preferably at least about 25 weight percent bound halogen in the esters. In the case of the preferred bromine-substituted esters described below, the bound bromine should preferably comprise at least 35 weight percent and may comprise in excess of the 40 or 45 weight percent of the ester. The high weight percent of halogen is important since the halogen is believed to be largely responsible for the flame retarding properties.

The compositions according to this invention contain other bromine and/or chlorine flame retardant compounds such as those that are well known in the art. Examples of such compounds include the following: 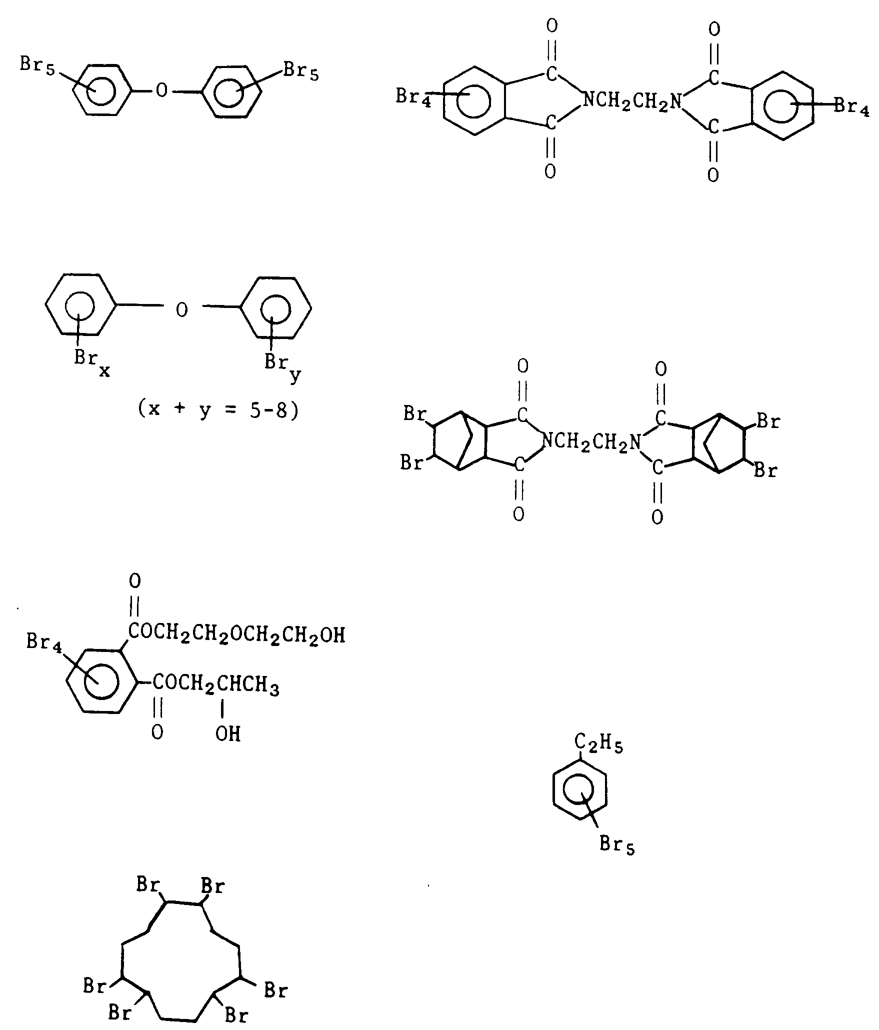 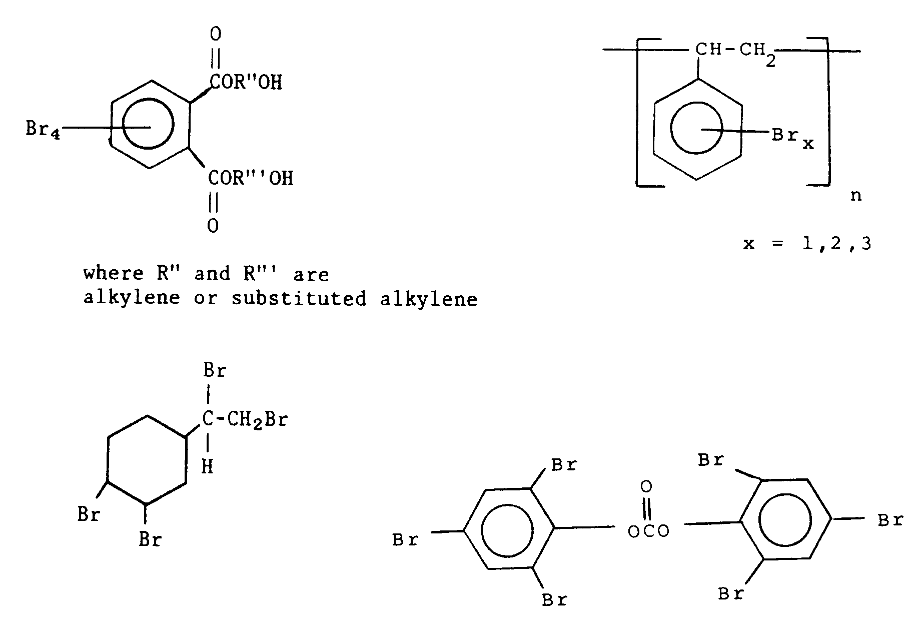 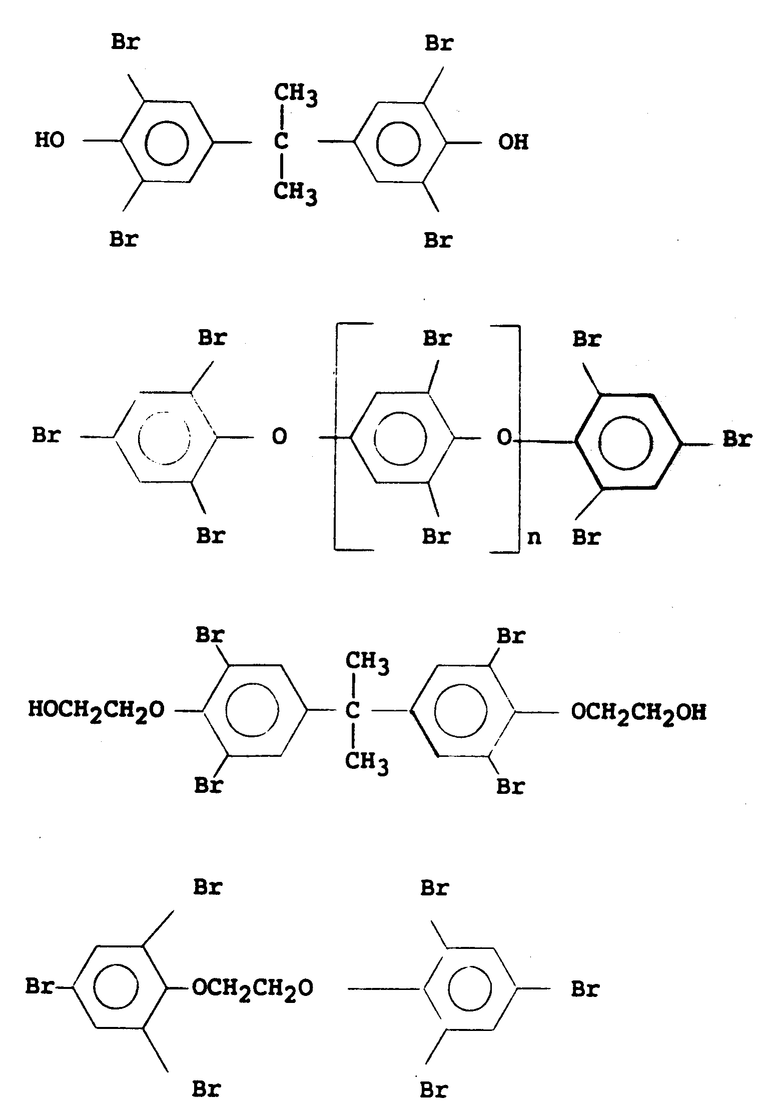 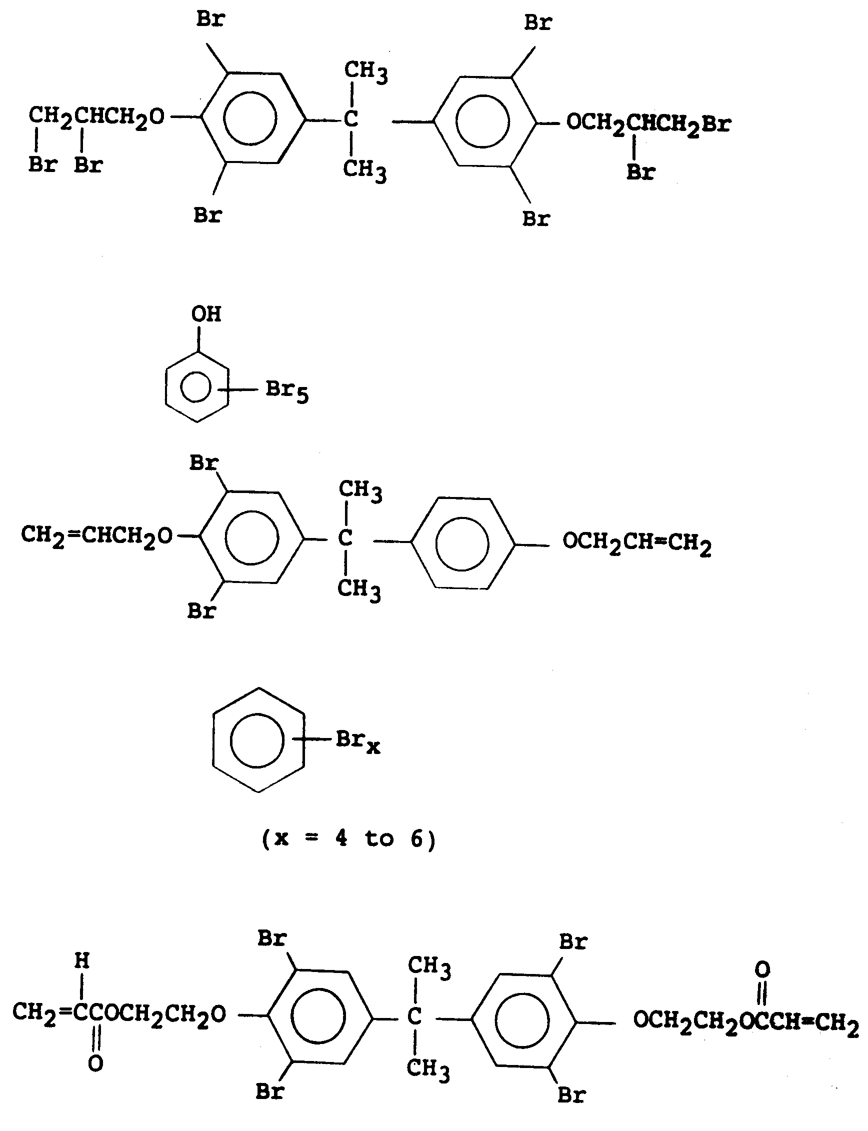 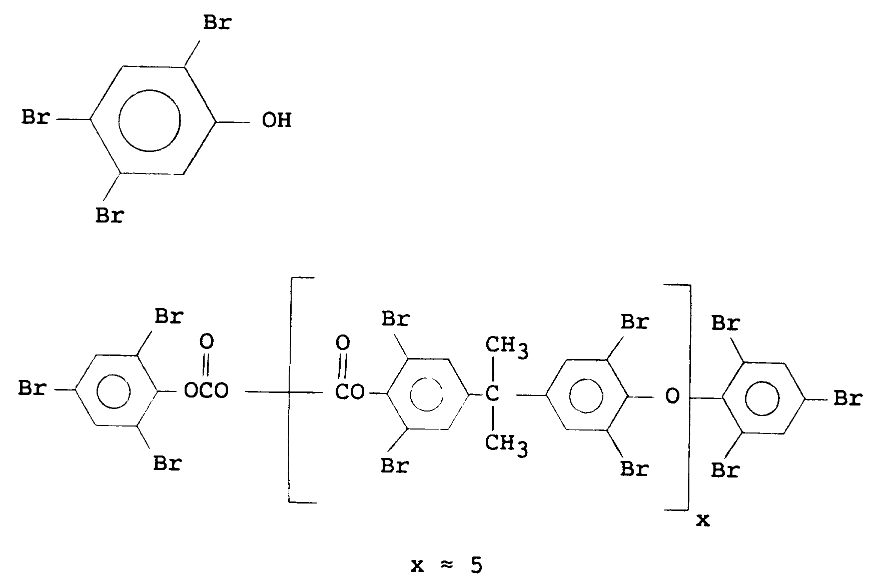
In practicing this invention, the polyhaloaromatic acid ester is added to the polyolefin resin or blend in any convenient manner, such as blending, extruding, kneading, etc. in order to produce a uniform composition. Flame retardant synergists such as antimony oxide (Sb₂O₃) may also be added if desired. In addition, other additives such as thermal stabilizers, ultraviolet stabilizers, reinforcing agents, organic polymers, mold release agents, blowing agents, colorants, and the like may also be optionally included.

However, as noted above, the polyhaloaromatic acid ester flame retardants themselves function as processing aids and compatibilizers for the polyolefin resins and blends, and may also function as tackifiers, mold release agents, plastisols, alhesives, plasticizers, polymer additives, and aids in preventing melt fracture.

The polyhaloaromatic acid ester is added to the polyolefin resin or blend in an amount effective to increase the flame retardancy of the composition. The exact amount necessary will vary with the particular resin and compound of the invention used. Generally, ratios of ester to resin in the range of 1:100 to 1:2 and preferably 1:4 to 1:20, will be effective depending upon the particular application.

In addition to providing increased flame retardancy to thermoplastic resins, the polyhaloaromatic acid esters of the present invention are advantageous as processing aids to improve the flowability or moldability of the resin during melt processing, such as extrusion or injection molding.

### Experimental Examples A-E extending beyond the area protected by the claims.

In the following examples, the flame retardancy is demonstrated. Compositions were prepared by mixing together the flame retardants, antimony oxide, and polypropylene resin on a roller until the compounds were blended thoroughly. The compounds were pelletized at 235-250°C and then injection molded into test specimens at 177-193°C. The UL-94 (Underwriters Laboratory Bulletin No. 94) vertical burn test was run and compared to a control consisting of only polypropylene resin and antimony oxide. The following tests were performed on the various materials according to the appropriate ASTM method, and the results are reported in Table I below, where each component is listed in parts by weight.
1. Limited Oxygen Index (LOI) - ASTM D-2863
2. Impact Strength - Notched Izod - ASTM D-256
3. Impact Strength - Gardner - ASTM D-3029
PP = Polypropylene (Himont's PROFAX 6501)
AO = Antimony Oxide
DBDPO = Decabromodiphenyl Oxide (83% Br)
DOTBP = Di-2-ethylhexyltetrabromophthalate (45% Br), also referred to as dioctyl tetrabromophthalate.

Table I clearly demonstrates the significant improvement in the flame retardancy of the compositions relative to the control (Example A), as indicated by the 50% higher LOI values and the fact that the control failed the UL-94 tests.

Examples B-E were all run at equal bromine levels. Decreasing the ratio of the conventional flame retardant (DBDPO) to that of DOTBP greatly increases the impact strength (Notched Izod and Gardner) of polypropylene.

**TABLE I**

| Sample No. | A | B | C | D | E |
|---|---|---|---|---|---|
| PP | 85 | 85 | 85 | 85 | 85 |
| DBDPO | | 43 | 39 | 35 | 30 |
| DOTBP | | | 11.9 | 23.5 | 40 |
| AO | 15 | 15 | 15 | 15 | 15 |
| UL-94 at 0.125" | Fail | V-O | V-O | V-O | V-O |
| UL-94 at 0.062" | Fail | V-O | V-O | V-O | V-O |
| LOI | 17.5 | 26.0 | 26.0 | 26.5 | 26.5 |
| * Notched Izod Impact (ft-lbs/in Notch) | .33 | .29 | .37 | .44 | .62 |
| ** Gardner Impact (in-lbs) | 12 | 10.7 | 12 | 37.6 | 127.3 |

| | | | | | |
|---|---|---|---|---|---|
| * to convert ft-lbf/in to J/m multiply by 53,38 | | | | | |
| ** to convert in-lbf to J divide by 8,99 | | | | | |

### Experimental Examples F-J extending beyond the area protected by the claims.

In the following examples, the flame retardancy of compositions is further demonstrated. The compositions were prepared by mixing together the flame retardants, antimony oxide, talc, (Cyprus' MISTRON 400) and polypropylene resin on a roller until the compounds were blended thoroughly. The compounds were pelletized at 200-260°C and then injection molded into test specimens at 171-193°C. The UL-94 vertical burn test was run and compared to a control consisting of only polypropylene resin, talc and antimony oxide. The same tests were performed on these materials as on the compositions of Examples A-E, and the results are shown in Table II below.

**TABLE II**

| Sample No. | F | G | H | I | J |
|---|---|---|---|---|---|
| PP | 76 | 76 | 76 | 76 | 76 |
| DBDPO | | 25 | 20 | 15 | 10 |
| DOTBP | | | 11.3 | 22.6 | 33.9 |
| AO | 6 | 6 | 6 | 6 | 6 |
| Talc | 18 | 18 | 18 | 18 | 18 |
| UL-94 at 0.125" | Fail | V-O | V-O | V-O | V-O |
| UL-94 at 0.062" | Fail | Fail | V-2 | V-2 | V-2 |
| LOI | 19.5 | 24.0 | 24.0 | 24.0 | 23.5 |
| * Notched Izod Impact (ft-lbs/in Notch) | 0.3 | 0.26 | 0.60 | 0.68 | 0.68 |
| ** Gardner Impact (in-lbs) | 9.3 | <8 | <8 | ∼12 | 29.8 |

| | | | | | |
|---|---|---|---|---|---|
| * to convert ft-lbf/in to J/m multiply by 53,88 | | | | | |
| ** to convert in-lbf to J divide by 8,99 | | | | | |

Table II clearly demonstrates the significant improvement in flame retardancy of the compositions (Examples G-I) relative to the control (Example F) and to the conventional flame retardant, DBDPO. The control sample failed the UL-94. Also DBDPO failed the UL-94 test at 0.062" which is more stringent than at 0.125". The compositions (Examples G-J) show 20-23% higher LOI values than the control.

Examples G-I were all run at equal bromine levels. Replacing a portion of the DBDPO with the flame retardants of this invention (DOTBP) greatly increases the Notched Izod Impact of polypropylene. A similar trend is shown with the Gardner impact data at the two highest loadings of DOTBP (Examples I and J).

## Claims

1. A flame retardant composition comprising a polyolefin resin and an ester of a polyhaloaromatic acid of the following general formula: 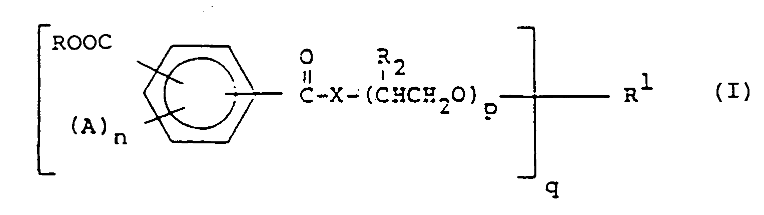 wherein
(a) the ring can have all possible isomeric arrangements
(b) R is selected from the group consisting of alkyl or substituted alkyl of 1 to 30 carbons, and 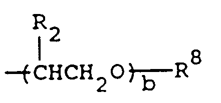 wherein R⁸ is an alkyl or substituted alkyl of 1 to 18 carbons, and b is 1 to 50;
(c) R¹ is selected from the group consisting of alkyl or substituted alkyl of 1 to 30 carbons, alkenyl or substituted alkenyl of 2 to 22 carbons, 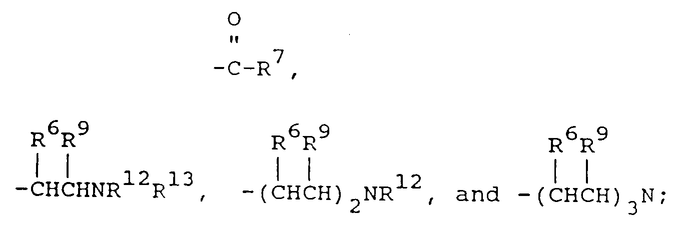 with the proviso that the valence of R¹ is equal to q;
(d) R² is independently selected from the group consisting of H and CH₃;
(e) R⁶, R⁹, R¹² and R¹³ are independently hydrogen or alkyl of 1 to 22 carbons, R⁷ is an alkyl of 1 to 18 carbons;
(f) p is an integer of 0 to 50;
(g) q is an integer of 1 to 6;
(h) A is halogen;
(i) X is O or NH; and
(j) n = 1 to 4, n = 4 excluded
in a weight ratio of ester of polyhaloaromatic acid to polyolefin resin within the range of 1:100 to 1:2; and additionally other brominated and/or chlorinated flame retardants selected from the group consisting of

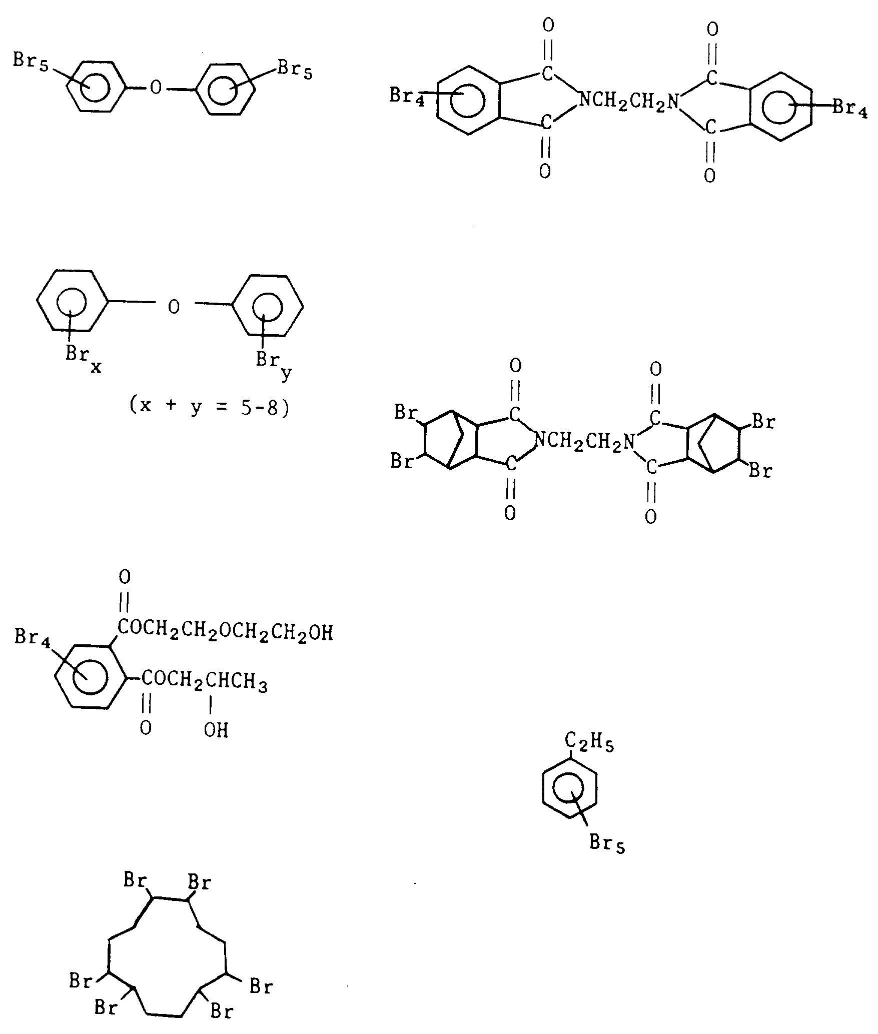

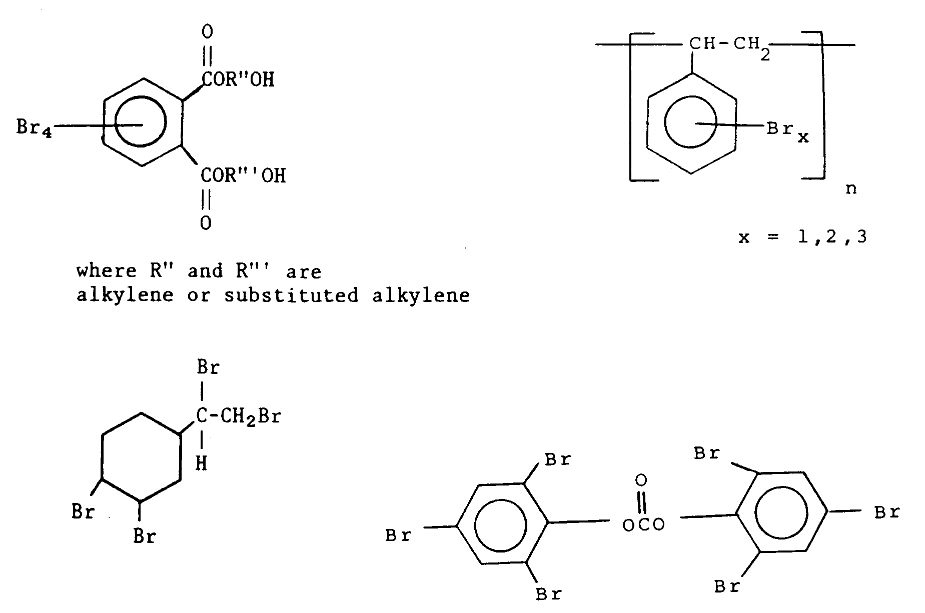

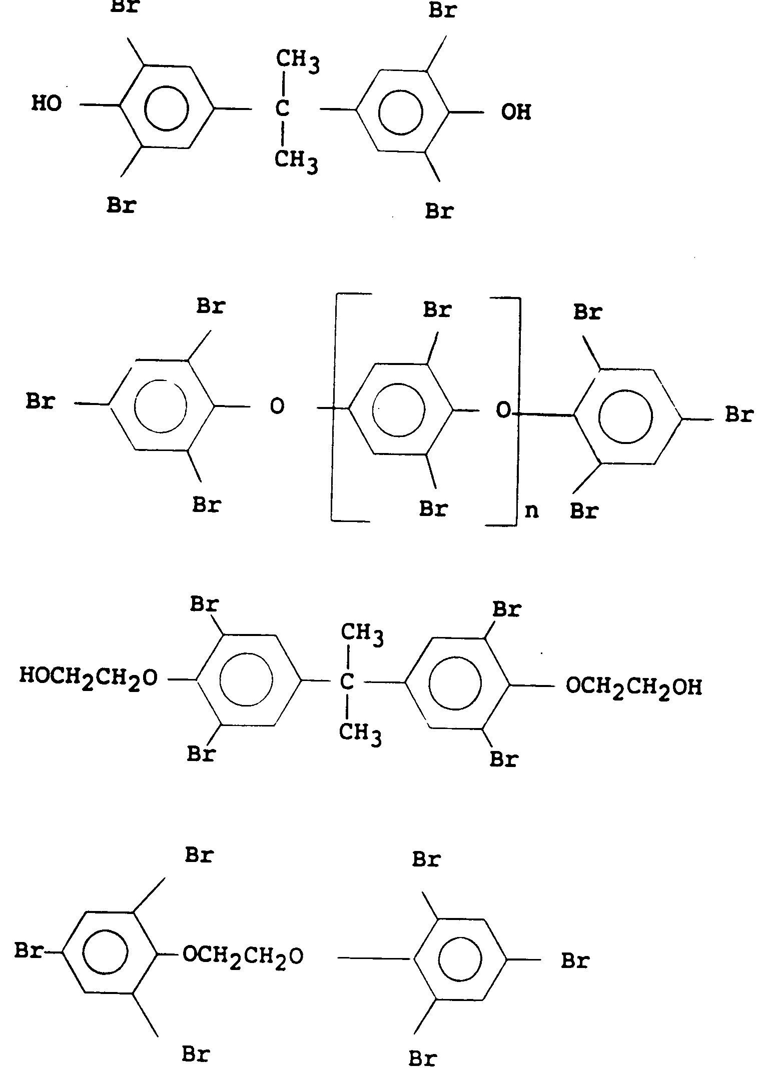

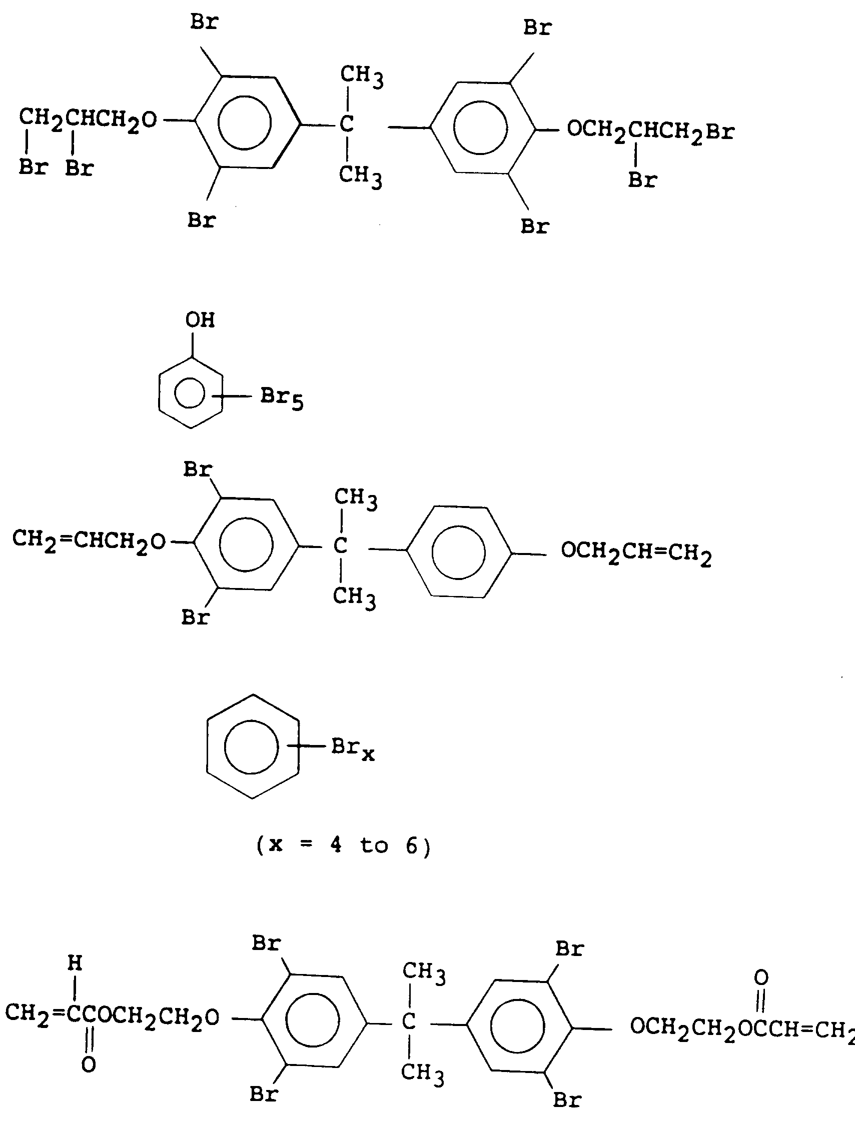

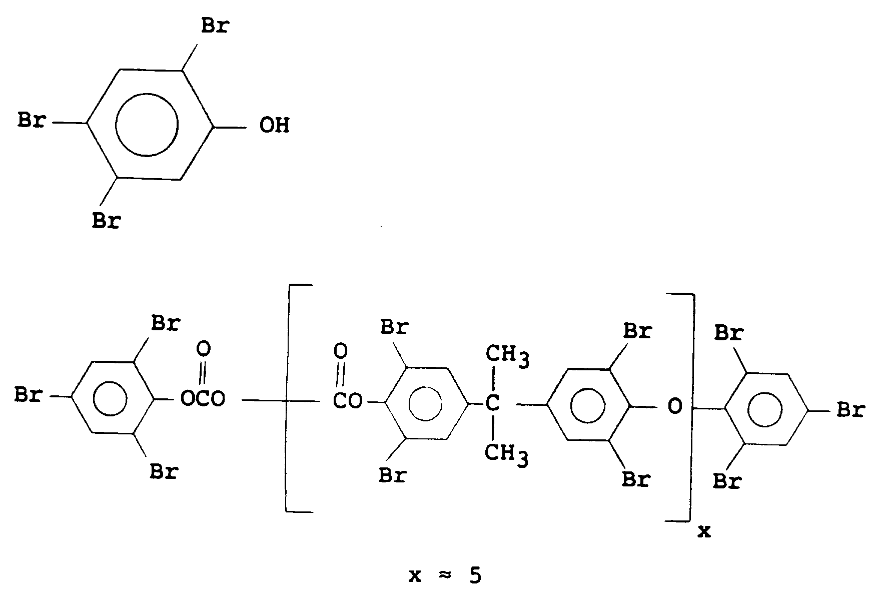

2. A composition according to claim 1 wherein A is chlorine or bromine and said ester of a polyhaloaromatic acid contains at least 25% by weight of bound halogen.

3. A composition according to claim 2, wherein A is bromine and the ester of a polyhaloaromatic acid contains at least about 35 weight percent bound bromine.

4. A composition according to claim 1 wherein said polyolefin resin is selected from the group consisting of polyethylene, polypropylene, ethylene-propylene copolymers, polyvinyl acetate, ethylene-vinyl acetate copolymers, polyvinyl alcohol, poly-4-methylpentene-1, polyisobutylene, acrylate ester polymers, methacrylate ester polymers, and blends of the above.

5. A composition according to claim 1 wherein said polyolefin resin is blended with a resin selected from the group consisting of polystyrene, styrene-butadiene copolymers, chlorinated polyethylenes, polyvinyl chloride, acrylonitrile-styrene-butadiene terpolymers, polybutylene terephthalate, polyphenylene oxides, polyphenylene oxide - high impact polystyrene blends, and mixtures thereof.

## Patentansprüche

1. Flammschutzmittel, umfassend ein Polyolefinharz und einen Ester einer polyhalogenaromatischen Säure der folgenden allgemeinen Formel: 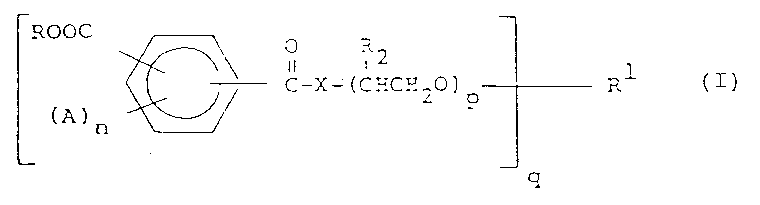 worin
(a) der Ring alle möglichen isomeren Anordnungen aufweisen kann,
(b) R ausgewählt ist aus der Gruppe, bestehend aus Alkyl oder substituiertem Alkyl mit 1 bis 30 Kohlenstoffatomen und 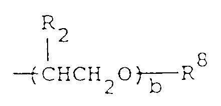 worin R⁸ Alkyl oder substituiertes Alkyl mit 1 bis 18 Kohlenstoffatomen bedeutet und b für 1 bis 50 steht;
(c) R¹ ausgewählt ist aus der Gruppe, bestehend aus Alkyl oder substituiertem Alkyl mit 1 bis 30 Kohlenstoffatomen, Alkenyl oder substituiertem Alkenyl mit 2 bis 22 Kohlenstoffatomen, 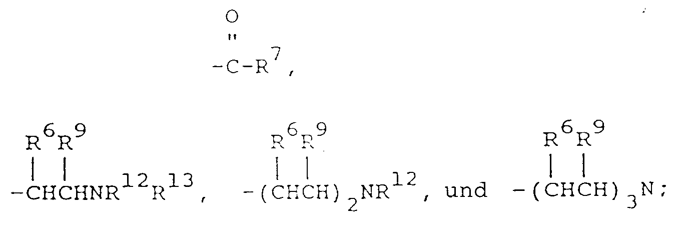 mit der Maßgabe, daß die Wertigkeit von R¹ gleich q ist;
(d) R² unabhängig ausgewählt ist aus der Gruppe, bestehend aus H und CH₃;
(e) R⁶, R⁹, R¹² und R¹³ unabhängig voneinander ein Wasserstoffatom oder Alkyl mit 1 bis 22 Kohlenstoffatomen bedeuten, R⁷ für ein Alkyl mit 1 bis 18 Kohlenstoffatomen steht;
(f) p für eine ganze Zahl von 0 bis 50 steht;
(g) q für eine ganze Zahl von 1 bis 6 steht;
(h) A ein Halogenatom bedeutet;
(i) X für O oder NH steht und
(j) n = 1 bis 4, wobei n = 4 ausgenommen ist,
in einem Gewichtsverhältnis Ester einer polyhalogenaromatischen Säure zu Polyolefinharz im Bereich 1:100 bis 1:2; und zusätzlich andere bromierte und/oder chlorierte Flammschutzstoffe, ausgewählt aus der Gruppe, bestehend aus

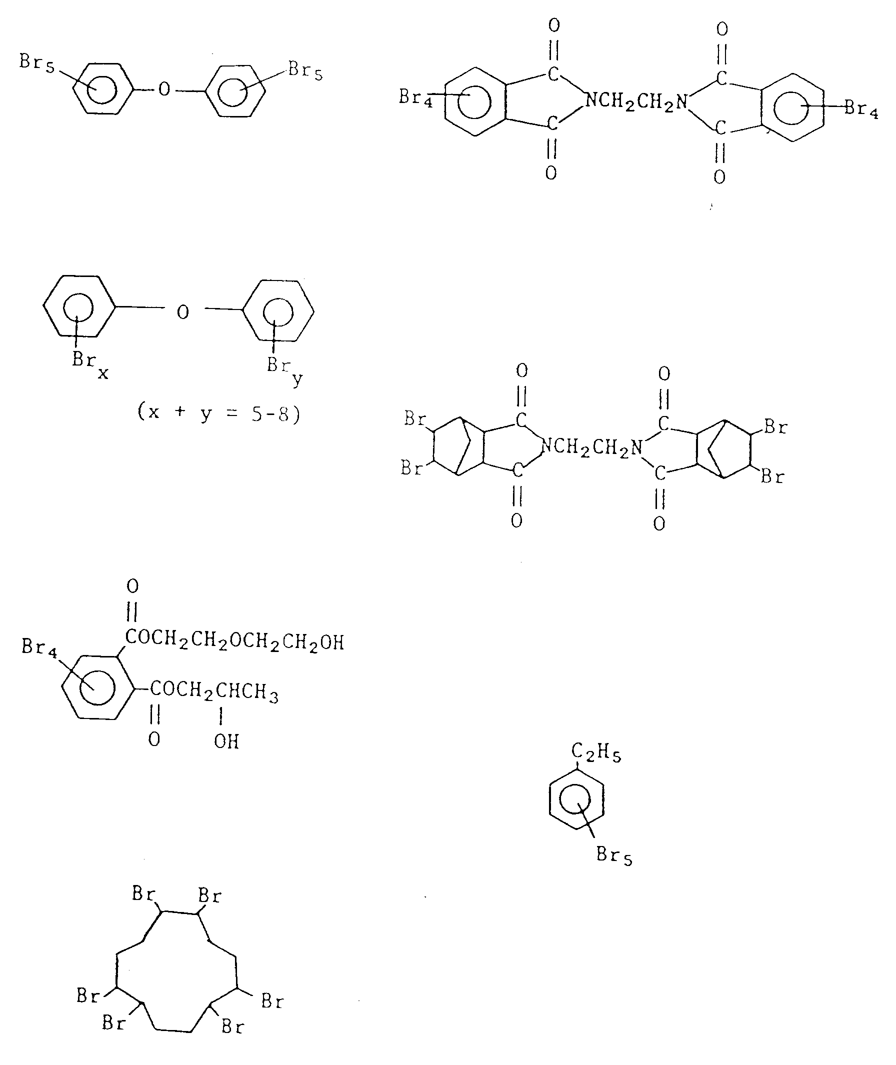

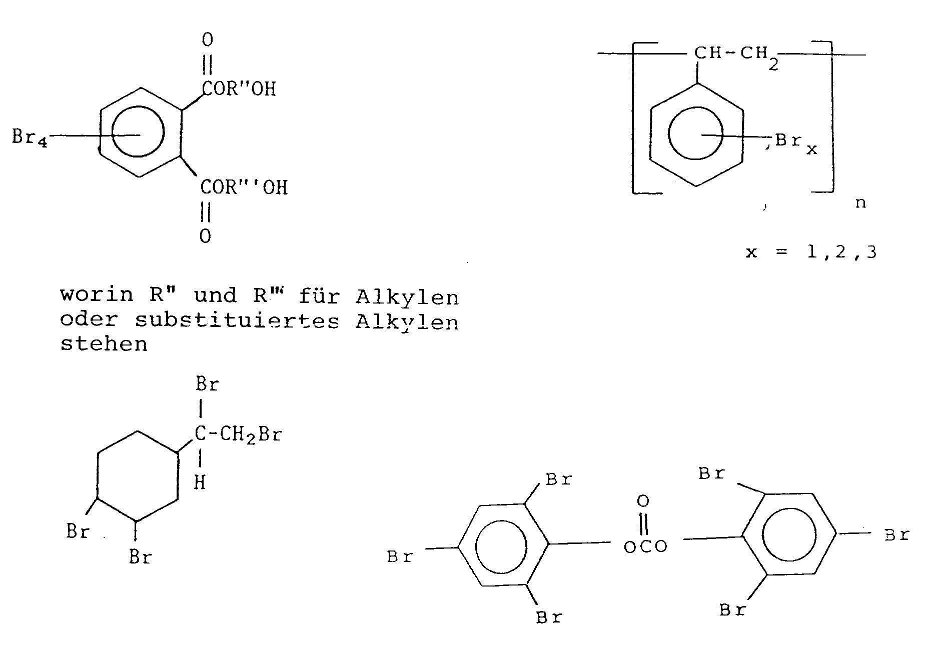

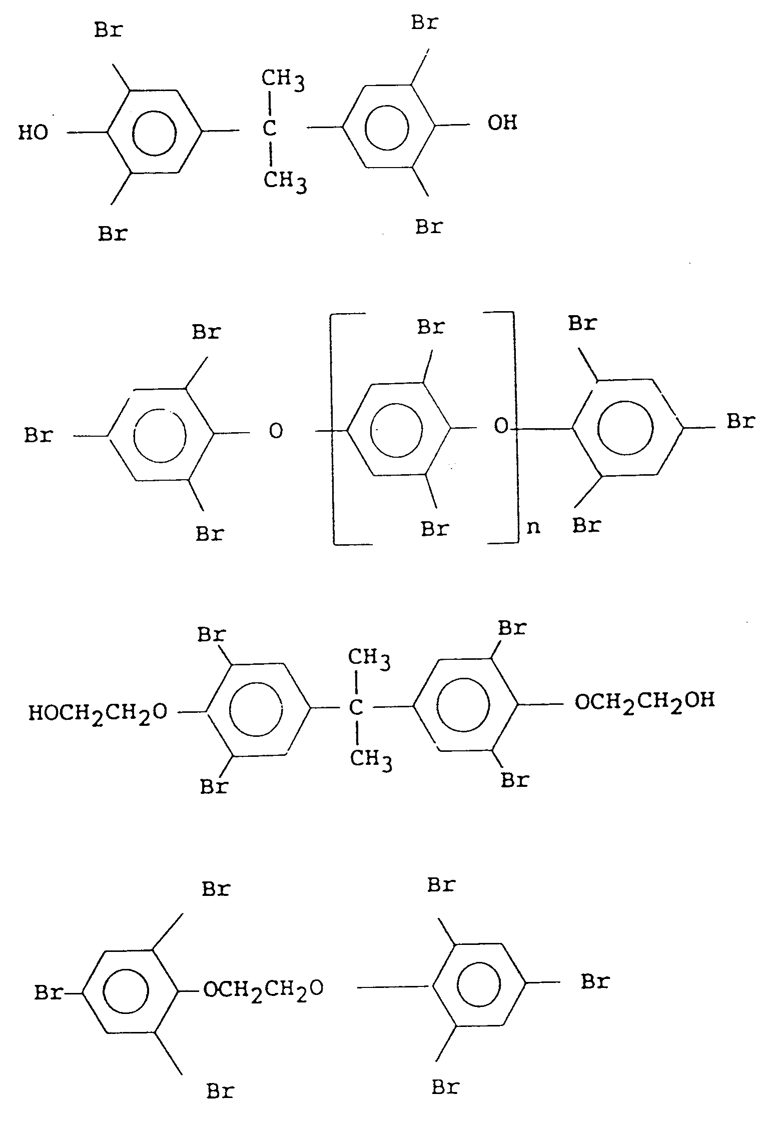

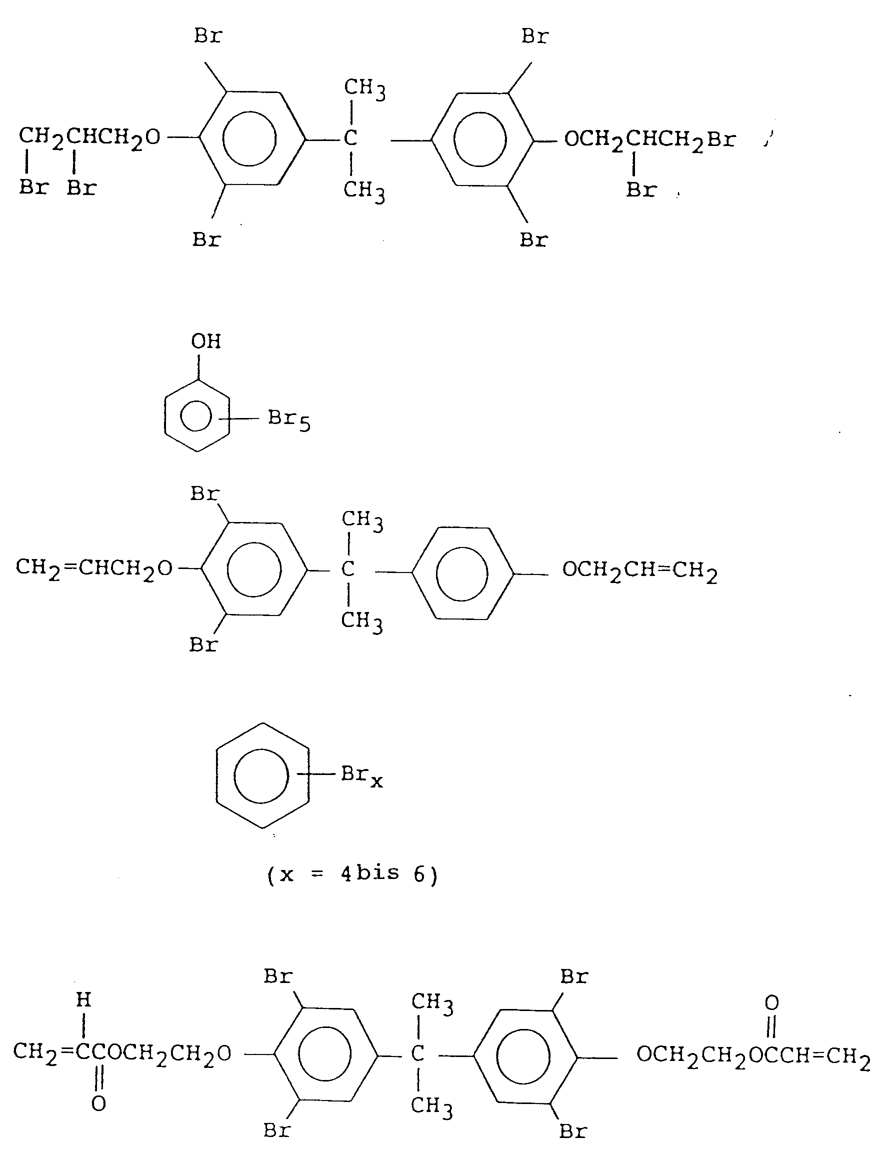

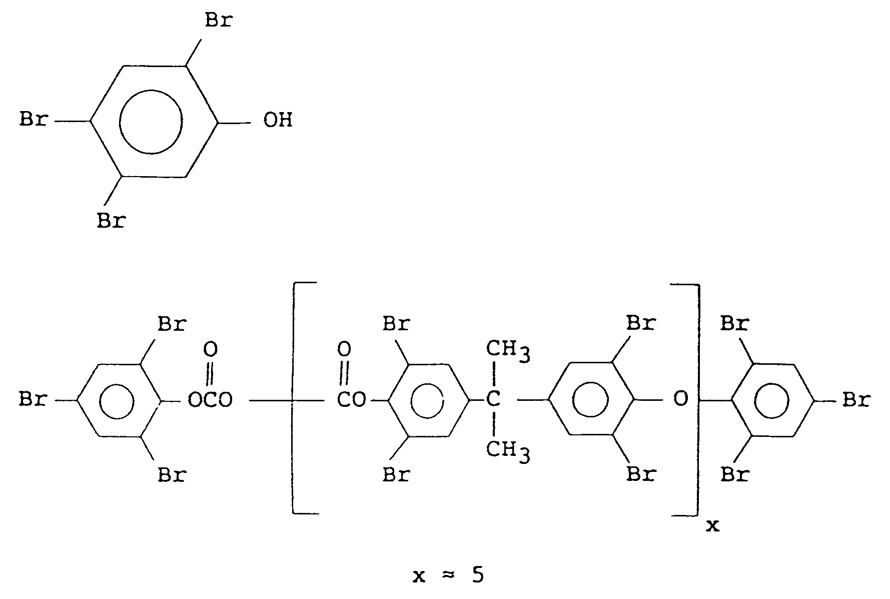

2. Mittel nach Anspruch 1, dadurch **gekennzeichnet,** daß A für ein Chlor- oder Bromatom steht und der Ester einer polyhalogenaromatischen Säure mindestens 25 Gew.-% gebundenes Halogen enthält.

3. Mittel nach Anspruch 2, dadurch **gekennzeichnet,** daß A für ein Bromatom steht und der Ester einer polyhalogenaromatischen Säure mindestens etwa 35 Gew.-% gebundenes Brom enthält.

4. Mittel nach Anspruch 1, dadurch **gekennzeichnet,** daß das Polyolefinharz ausgewählt ist aus der Gruppe, bestehend aus Polyethylen, Polypropylen, Ethylen-Propylen-Copolymeren, Polyvinylacetat, Ethylen-Vinylacetat-Copolymeren, Polyvinylalkohol, Poly-4-methylpenten-1, Polyisobutylen, Acrylatesterpolymeren, Methacrylatesterpolymeren und Gemischen der vorstehend genannten.

5. Mittel nach Anspruch 1, dadurch **gekennzeichnet,** daß das Polyolefinharz mit einem Harz, ausgewählt aus der Gruppe, bestehend aus Polystyrol, Styrol-Butadien-Copolymeren, chlorierten Polyethylenen, Polyvinylchlorid, Acrylnitril-Styrol-Butadien-Terpolymeren, Polybutylenterephthalat, Polyphenylenoxiden, Polyphenylenoxid-hochschlagfestes-Polystyrol-Gemischen und Gemischen davon, vermischt worden ist.

## Revendications

1. Composition retardatrice de flamme, comprenant une résine polyoléfinique et un ester d'un acide polyhalogéno-aromatique de formule générale suivante : 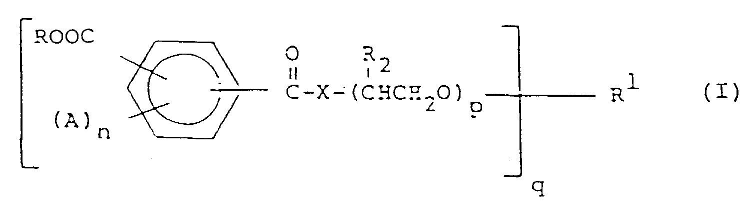 dans laquelle
(a) le noyau peut avoir tous les arrangements isomériques possibles
(b) R est choisi dans le groupe consistant en un radical alkyle ou alkyle substitué ayant 1 à 30 atomes de carbone, et 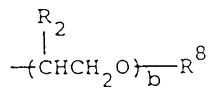 où R⁸ est un radical alkyle ou alkyle substitué ayant 1 à 18 atomes de carbone, et b a une valeur de 1 à 50 ;
(c) R¹ est choisi dans le groupe consistant en un radical alkyle ou alkyle substitué ayant 1 à 30 atomes de carbone, alcényle ou alcényle substitué ayant 2 à 22 atomes de carbone, 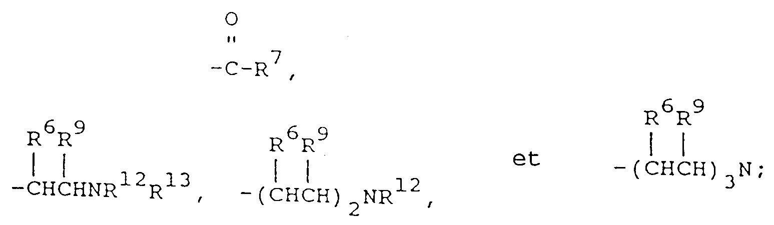 sous réserve que la valence de R¹ soit égale à q ;
(d) R² est choisi indépendamment dans le groupe comprenant H et le radical CH₃ ;
(e) R⁶, R⁹, R¹² et R¹³ représentent indépendamment de l'hydrogène ou un radical alkyle ayant 1 à 22 atomes de carbone, R⁷ est un radical alkyle ayant 1 à 18 atomes de carbone ;
(f) p est un nombre entier de 0 à 50 ;
(g) q est un nombre entier de 1 à 6 ;
(h) A est un halogène ;
(i) X représente O ou NH ; et
(j) n a une valeur de 1 à 4, la valeur 4 exclue, dans un rapport en poids de l'ester d'acide polyhalogéno-aromatique à la résine polyoléfinique compris dans la plage de 1:100 à 1:2 ;
et en outre, d'autres retardateurs de flamme bromés et/ou chlorés choisis dans le groupe comprenant

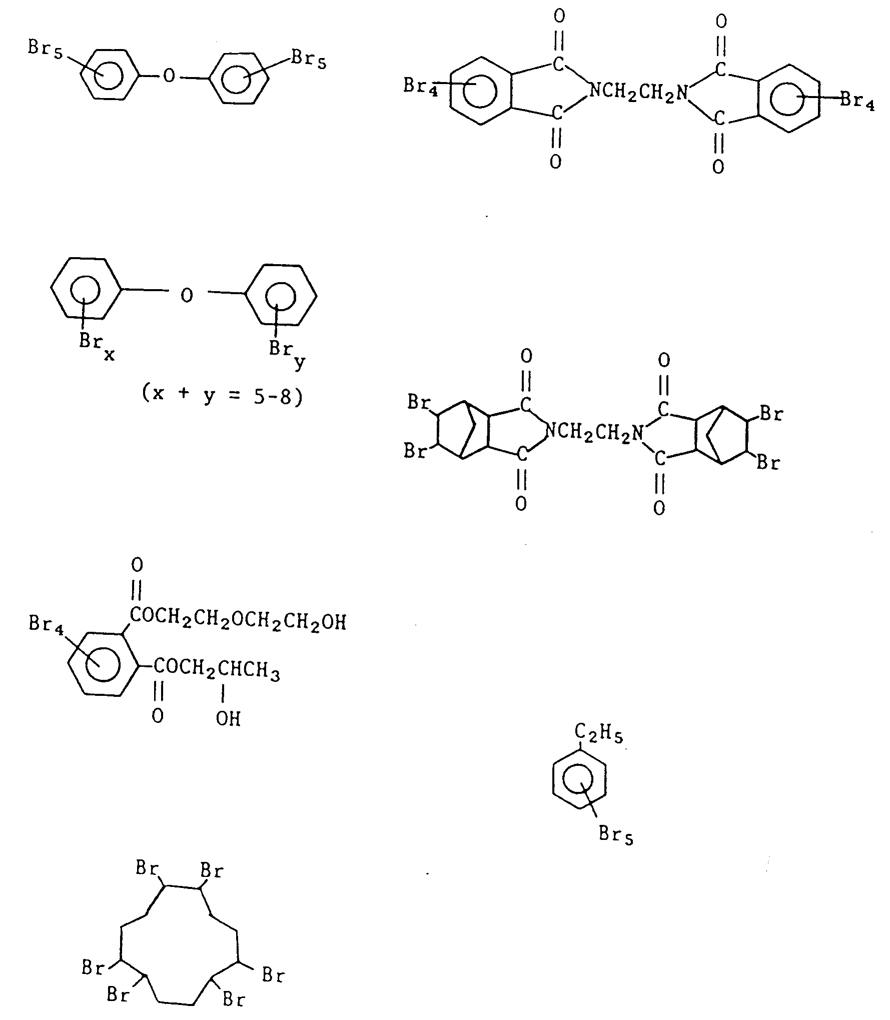

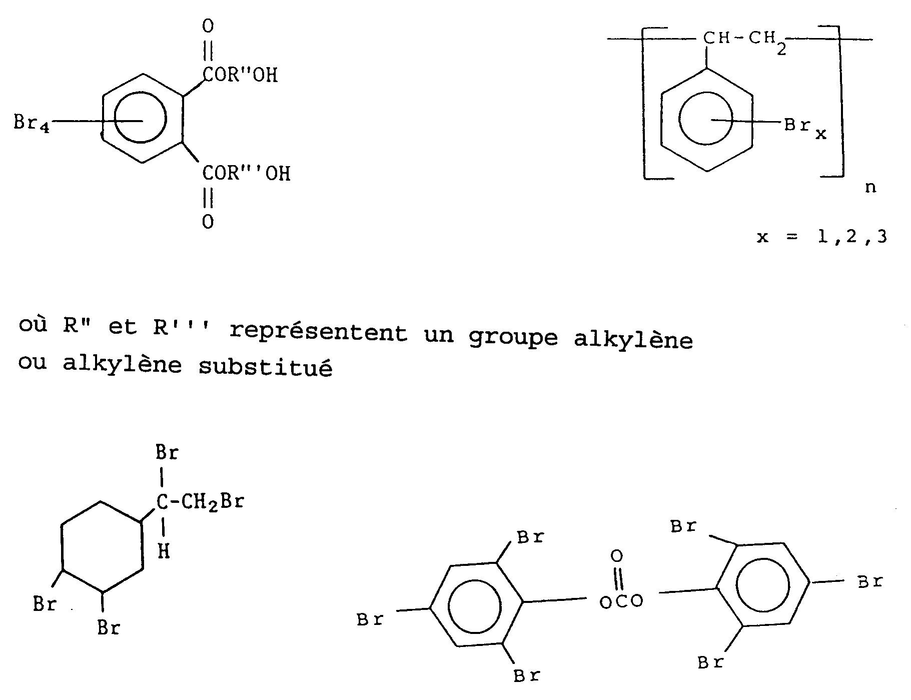

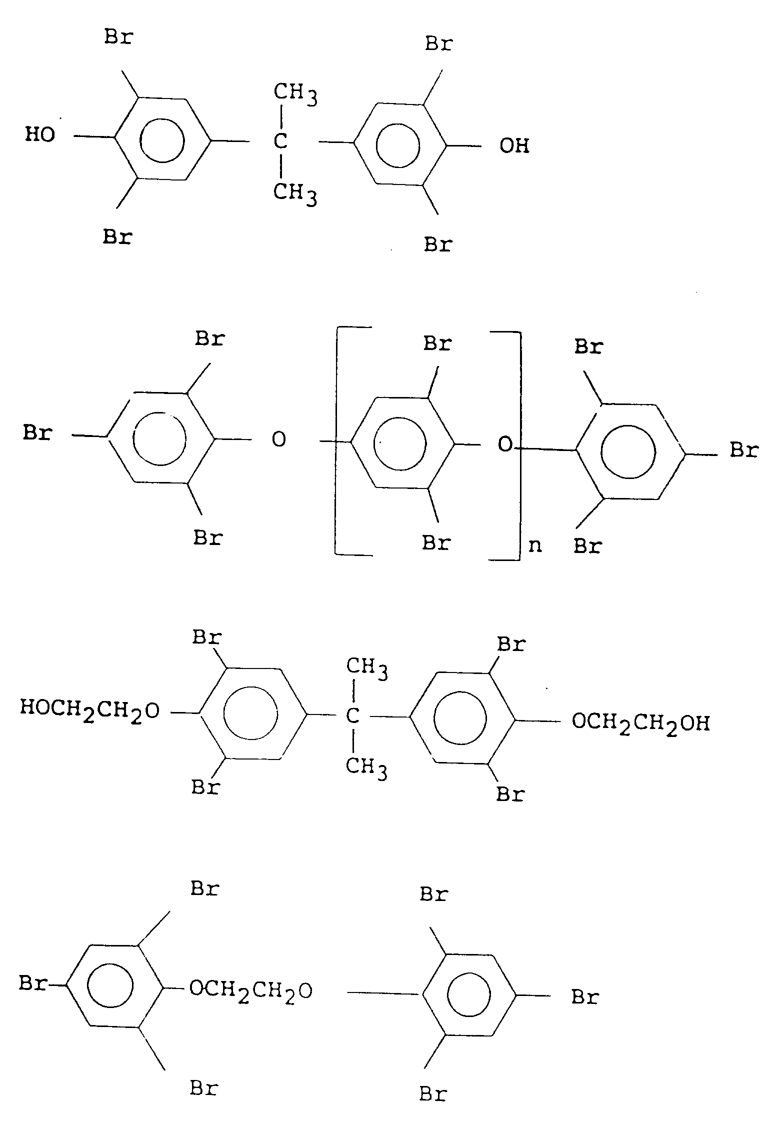

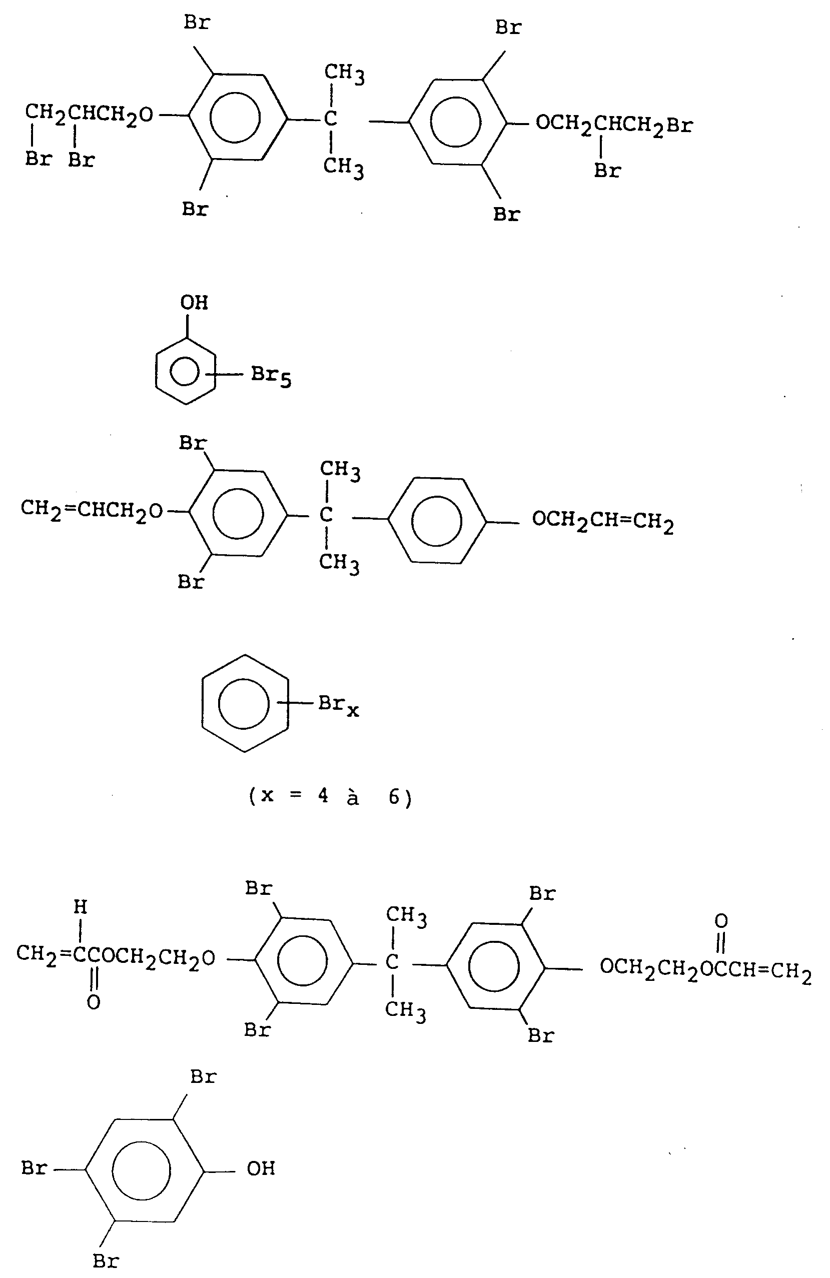

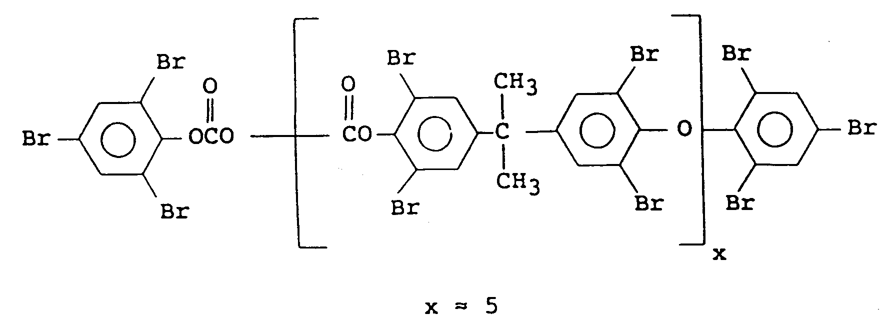

2. Composition suivant la revendication 1, dans laquelle A est le chlore ou le brome et l'ester d'acide polyhalogéno-aromatique contient au moins 25 % en poids d'halogène lié.

3. Composition suivant la revendication 2, dans laquelle A est le brome et l'ester d'un acide polyhalogéno-aromatique contient au moins environ 35 % en poids de brome lié.

4. Composition suivant la revendication 1, dans laquelle la résine polyoléfinique est choisie dans le groupe comprenant un polyéthylène, un polypropylèrte, des copolymères éthylène-propylène, un polyacétate de vinyle, des copolymères d'éthylène-acétate de vinyle, un polymère d'alcool vinylique, un poly-4-méthylpentène-1, un polyisobutylène, des polymères d'esters acryliques, des polymères d'esters méthacryliques et des mélanges de ces résines.

5. Composition suivant la revendication 1, dans laquelle la résine polyoléfinique est mélangée avec une résine choisie dans le groupe comprenant un polystyrène, des copolymères, styrène-butadiène, des polyéthylènes chlorés, un polymère de chlorure de vinyle, des terpolymères acrylonitrile-styrène-butadiène, un polymère de téréphtalate de butylène, des polyphénylène-oxydes, des associations polyphénylène-oxyde - polystyrène de grande résistance au choc, et des mélanges de ces résines.
